# EUROPEAN PATENT SPECIFICATION

(11) **EP 4 230 475 B1**
(45) Date of publication and mention of the grant of the patent: **18.03.2026**
(21) Application number: 21881646.0
(22) Date of filing: 04.08.2021
(51) Int. Cl.: B60N 2/07

(54) **SLIDING RAIL HAVING ENHANCED RIGIDITY MODULUS**
GLEITSCHIENE MIT ERHÖHTEM STEIFIGKEITSMODUL
RAIL COULISSANT PRÉSENTANT UN MODULE DE RIGIDITÉ AMÉLIORÉ

(30) Priority: 19.10.2020 CN 202011117203
(43) Date of publication of application: 23.08.2023
(73) Proprietor: Keiper (Changshu) Seating Mechanisms Co., Ltd., Changshu, Jiangsu 215500 (CN)
(72) Inventor: HU, Haila, Changshu, Jiangsu 215500 (CN); HUANG, Bin, Changshu, Jiangsu 215500 (CN); FU, Wenjin, Changshu, Jiangsu 215500 (CN); NI, Hongbin, Changshu, Jiangsu 215500 (CN); LIU, Dong, Changshu, Jiangsu 215500 (CN)
(74) Representative: Santarelli
(86) International application number: PCT/CN2021/110435
(87) International publication number: WO 2022/083227

(56) References cited:
- WO-A1-2017/086539
- CN-A- 107 878 263
- CN-A- 109 421 554
- CN-A- 109 562 704
- CN-A- 112 224 098
- CN-U- 206 012 372
- CN-U- 209 409 854
- JP-A- 2016 020 120
- JP-A- 2019 196 079
- US-A1- 2018 086 233
- US-A1- 2019 168 639

## Description

### Technical Field

The present invention relates to an improvement of a sliding rail assembly for a vehicle, and in particular to a sliding rail having an enhanced rigidity modulus.

### Background of the Invention

To meet the comfortability requirement of passengers, a vehicle seat usually requires angle adjustment and displacement adjustment, and an angle adjuster is generally used during adjustment; and a sliding rail is arranged on the seat to realize displacement adjustment, balls are lined between the seat and the sliding rail to reduce friction, and the balls are arranged in a retainer to prevent scattering.

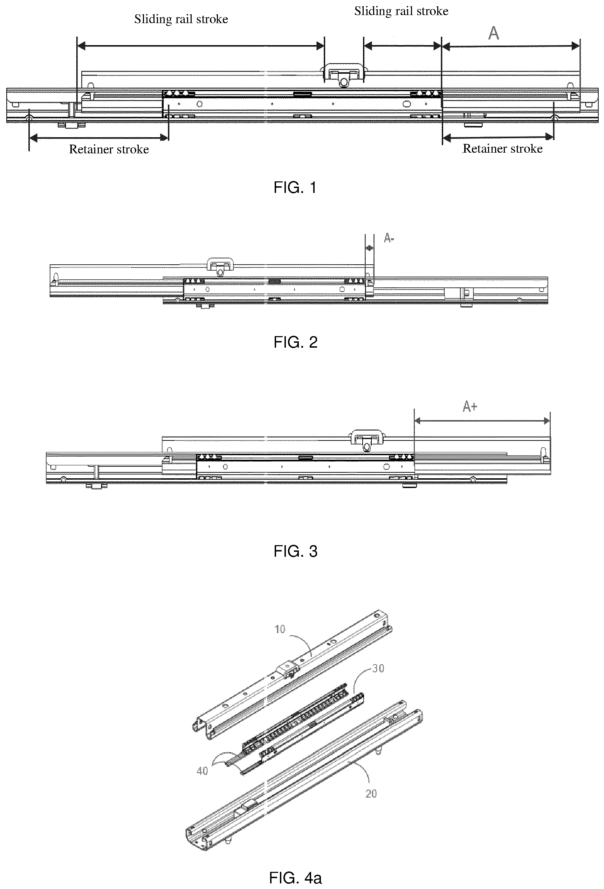

As shown in FIG. 1 to FIG. 3, they are sliding state diagrams of an existing sliding rail assembly for a vehicle seat: the movement mode of the retainers is rolling; the movement mode of the sliding rail is sliding; the movement stroke of the retainer is half of the movement stroke of the sliding rail; and when an upper rail moves to a rearmost position, a distance between a rear end of the upper rail and a rear end of the retainer becomes larger, so this part of upper rail loses the longitudinal support of a lower rail and is in a suspended state. The gravity center of a normal seat load is at a back position, so this section of upper rail is suspended to affect the whole rigidity of the sliding rail, and is easier to shake during vehicle driving, which will bring poor body feeling, or even some noise.

In some vehicle models, to facilitate the third row of passengers to enter the vehicle, due to the space limitation of the rear seats, the second row of sliding rail only can adopt a short retainer, the rigidity is not ideal.

In addition, one development trend of the sliding rail is lightweight. With the application of high-strength steel, the sliding rail has been able to overcome the strength problem and is made thinner and lighter. However, the subsequence reduction of rigidity has brought difficulties to industrial products, thereby limiting the further lightweight.

Patent Application US 2018/086233 A1 discloses an adjusting device for longitudinal adjustment of a vehicle seat, particularly of a motor vehicle seat, comprising: a first rail and a second rail, which is movably guided in a longitudinal direction relative to the first rail, and a linear guide extending in the longitudinal direction and disposed between the first rail and the second rail in a bearing area, wherein the linear guide comprises a retainer and a plurality of rolling elements; the retainer comprises a side wall, a plurality of recesses being formed in the side wall; the rolling elements are supported in the recesses of the retainer spaced apart from each other in the longitudinal direction; and the rolling elements include a set of rolling elements consisting of at least one roller and at least one ball.

Patent Application US 2019/168639 A1 discloses an improved rail system for a vehicle seat and a sliding block for a rail system. The rail system according to Patent Application US 2019/168639 A for a vehicle seat comprises a lower rail, an upper rail, a sliding block and at least one rolling body cage having rolling bodies. The sliding block is rigidly connected to the lower rail and has end stops for the rolling body cage. The rolling body cage is movable relative to the sliding block parallel to a longitudinal axis of the lower rail between two end positions defined by the end stops and is coupled to the lower rail via the rolling bodies. The upper rail is mounted movably on the sliding block along the longitudinal axis of the lower rail and is coupled to the rolling body cage.

### Summary of the Invention

The present invention provides a novel sliding rail design according to the appended claims.

According to the present invention, one section of extending supporting structure is designed on the original retainer, or a fixed supporting structure is mounted at a rear section of the sliding groove of the lower rail. Support can be provided to the whole upper rail through the extending supporting structure or the fixed supporting structure. In particular, the modal of the sliding rail can be effectively improved under the working conditions of bumping and shaking.

### Brief description of the Drawings

In order to describe the technical solutions in the embodiments of the present invention more clearly, the following briefly introduces the accompanying drawings required for describing the embodiments or the prior art. Apparently, the accompanying drawings in the following description show only some embodiments of the present invention, and those of ordinary skill in the art may still derive other drawings from these drawings without any creative efforts.
FIG. 1 shows a state in which a sliding rail is located at a design position, where the sliding rail can move back and forth, and a distance between a retainer and a rear end of an upper rail is A;
FIG. 2 shows a state in which a sliding rail is located at a frontmost position, where a distance between a retainer and a rear end of an upper rail is minimum and is A-;
FIG. 3 shows a state in which a sliding rail is located at a rearmost position, where a distance between a retainer and a rear end of an upper rail is maximum and is A+;
FIG. 4a to FIG. 4b are an exploded view and an assembling completion diagram of a sliding rail assembly in Embodiment 1;
FIG. 4c is a sectional view of a vertical section of a retainer between an upper rail assembly and a lower rail assembly in Embodiment 1;
FIG. 5a to FIG. 5c are schematic diagrams of a sliding stroke of a sliding rail in Embodiment 1;
FIG. 6a and FIG. 6b are schematic diagrams in which an upper assembly and a lower assembly of a retainer are connected together through a middle bending part;
FIG. 6c is a schematic diagram in which a steel ball clamping groove and a reinforcing rib are arranged on a retainer in Embodiment 1, where a supporting structure is arranged at one end of one of retainers;
FIG. 6d and FIG. 6e are schematic diagrams in which an array groove is formed in front and back sides of the supporting structure in Embodiment 1;
FIG. 6f shows that one section of a supporting structure is internally filled with a filled extending section in Embodiment 1;
FIG. 6g and FIG. 6h are schematic diagrams in which the extending section in 6f is internally filled with metal wires or metal balls in Embodiment 1;
FIG. 7a is a schematic diagram in which two middle ends of each retainer are connected together through a straw in Embodiment 1;
FIG. 7b is a partial enlarged diagram of FIG. 7a;
FIG. 8a respectively shows an exploded view of a sliding rail assembly in Embodiment 2;
FIG. 8b and FIG. 8c are sliding schematic diagrams of a sliding rail assembly in Embodiment 2; and
FIG. 8d and FIG. 8f are respectively a stereogram, a side view and a top view of a fixed supporting structure in Embodiment 2.

### Detailed Description of Embodiments

In the following description, numerous specific details are given to provide a more thorough understanding of the present invention. However, it will be apparent to those skilled in the art that the present invention may be implemented without one or more of these details. In other examples, to avoid confusion with the present invention, some technical features well known in the art are not described.

To thoroughly understand the present invention, detailed steps and detailed structures will be put forward in the following description so as to explain the technical solutions of the present invention. Preferred embodiments of the present invention are described in detail below; however, in addition to these detailed descriptions, the present invention ma have other embodiments.

### Embodiment 1

For front seats of a vehicle, a sliding rail and a sliding rail stroke are generally long, so a longer retainer 30 can be matched. Due to the length limitation of an upper sliding rail, a length of the retainer 30 will be limited within a certain range. When a long retainer 30 is used, the modal performance of a front end of the sliding rail is generally good, but a mid-rear section of the sliding rail is not supported by the retainer 30, so the problem of poor modal occurs sometimes. If the modal is not up to standard, resonance of parts will be caused, thereby resulting in the problems of abnormal sound and reduced durability.

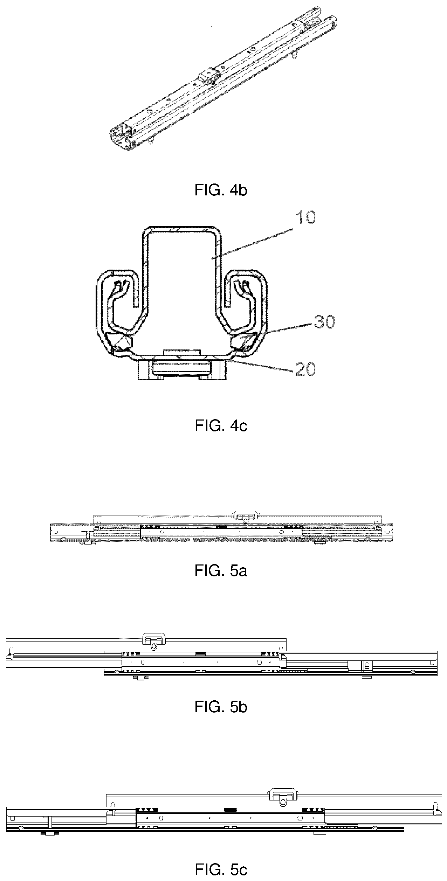

Based on the above reasons, this embodiment designs a sliding type retainer 30 which takes the retainer 30 of the sliding rail of the front seats as a basis and lengthens the lower half section; and when the sliding rail is at a design position, the new retainer 30 provides additional support for the upper rail at the mid-rear section, in particular under the shaking occasion, the modal of the sliding rail can be effectively improved, and the quality of the sliding rail can be improved. Referring to FIG. 4a and FIG. 4b, the specific solution is as follows: the sliding rail includes an upper rail assembly 10, a lower rail assembly 20, and retainers 30. The upper rail assembly 10 is slidably arranged in a sliding groove in the lower rail assembly 20 through a pair of retainers 30. A limiting block for limiting the sliding stroke of the upper rail assembly 10 at a inner rear end in the sliding groove is arranged at the rear end in the sliding groove. First raised ribs and/or steel ball clamping grooves are arranged at intervals on surfaces, in contact with the upper rail assembly 10 and the lower rail assembly 20, of the retainers 30. A steel ball is mounted in the steel ball clamping groove. A supporting structure 40 extending backwards in a length direction of the retainers 30 is arranged at a front end of each of the retainers 30. When the upper rail assembly 10 slides backwards to the farthest stroke, the supporting structure 40 provides auxiliary support for a mid-rear section of the upper rail assembly 10, the supporting structure 40 is in contact with the lower rail assembly 20, and a gap is reserved between the supporting structure 40 and the upper rail assembly 10.

The movement stroke of the retainers 30 is half of the movement stroke of the sliding rail. When the upper rail moves to a frontmost position, due to the limitation of an upper rail rear ball blocking point and a lower rail front ball blocking point, the retainers 30 cannot be entirely lengthened, so the sliding stroke of the retainers 30 is limited. When the upper rail assembly 10 slides backwards to a farther stroke, effective support cannot be provided for the mid-rear section of the upper rail assembly 10. Therefore, according to the present invention, the rear end of the retainer 30 extends backwards to form one section of elastic supporting structure 40. This section of elastic supporting structure 40 can provide longitudinal support for the upper rail assembly 10 sliding to the rear end. In particular, under the shaking occasion, the modal of the sliding rail can be effectively improved, and the quality of the sliding rail can be improved. As shown in FIG. 5a to FIG. 5c, FIG. 5a is a combined diagram of an upper sliding rail and a lower sliding rail in an initial state. During sliding forward, as shown in FIG. 5b, the stability of the upper rail can be ensured due to the action of the retainer at this time. During sliding backward to the farthest stroke, the retainer is limited by the sliding stroke and cannot provide sufficient support for the upper rail. The extending section elastic supporting structure 40 designed by the present invention provides auxiliary support for the rear half section of the upper rail, as shown in FIG. 5c.

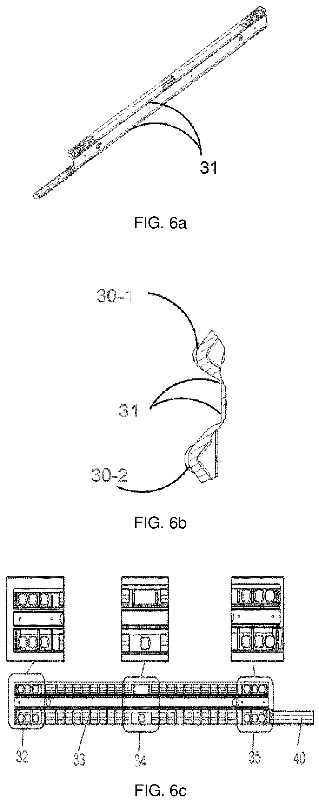

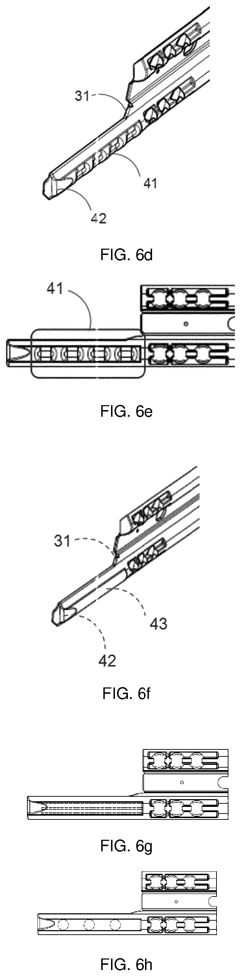

FIG. 4a is a schematic diagram of a retainer 30 and a supporting structure 40 at a rear end of the retainer in an optional embodiment. The retainer 30 has the following characteristics:
(1) the body material of the retainer 30 uses a nylon (PA6) material with high elasticity and shock-absorbing property, and the design state facilitates injection molding.
(2) The body of the retainer 30 includes upper and lower assemblies 30-1 and 30-2. The upper and lower assemblies are connected together through a thin bending area 31 facilitating bending, as shown in FIG. 6a and FIG. 6b.
(3) The steel balls are fixed on the retainer 30 through the steel ball clamping grooves 32, 34 and 35 in front and back sides of the retainer 30, and raised ribs are designed on the front and back sides, so that the contact area of the retainer 30 and the sliding rail, and the friction force are reduced, as shown in FIG. 6c.
(4) Array reinforcing ribs 33 are arranged on the front and back sides of the retainer 30, so that the overall strength of the retainer 30 is improved, as shown in FIG. 6c.

In an optional embodiment, to ensure the strength of the supporting structure 40 at the extending section, the material selects POM or other materials with high strength. The supporting structure 40 is in contact with the lower sliding rail, and a certain gap is reserved between the supporting structure and the lower sliding rail. Meanwhile, to reduce the friction force between the retainer 30 and the sliding rail, the surface of the retainer 30 is spray-coated with one layer of coating with lubricating property, such as PTFE, so that additional support can be provided for the rear section of the sliding rail without affecting the sliding force of the sliding rail.

In an optional embodiment, to improve the sliding smoothness of the upper rail assembly and the lower rail assembly, a groove 41 and a protrusion may be designed on a contact part of the supporting structure 40 and the lower rail assembly 20 to simulate a steel ball structure (as shown in FIG. 6d to FIG. 6e), thereby reducing the contact surface with the lower sliding rail; furthermore, the surface is spray-coated with one layer of coating with lubricating property, such as PTFE to reduce the friction force, support the upper rail and improve the modal of the sliding rail.

In an optional embodiment, the body of the retainer 30 and the supporting structure 40 may be made of the same or different materials. For example, the body of the retainer 30 and the supporting structure 40 are made of polyamide-6 (PA6) materials, or the retainer 30 is made of the polyamide-6 material and the supporting structure 40 is made of polyformaldehyde resin (POM) or other materials with higher strength. When the body of the retainer 30 and the supporting structure 40 are made of the same PA6 material, to improve the rigidity of the extending section 43 in FIG. 6f, the extending section 43 may be internally filled with metal wires (FIG. 6g) or metal balls (FIG. 6h), the upper rail is supported at the rear end of the sliding rail, in particular, under the bumping occasion, the modal of the sliding rail can be effectively improved; meanwhile, a lubricating coating can be added on the surface of the supporting structure 40 to reduce the friction force.

In an optional embodiment, continuously referring to FIG. 6f, a guide bevel edge 42 is arranged at a rear end of the supporting structure 40. When the upper rail and the lower rail are paired, the upper rail is prevented from colliding with the extending section, and damage to the structure is avoided.

During use, firstly, the steel ball is embedded into the steel ball clamping groove of the retainer 30, then the retainer 30 is bent along the bending area 31, and the retainer 30 is assembled in the middle of the upper rail and the lower rail, so that the retainer 30 can slide in a ball groove together with the upper rail assembly and support the upper rail.

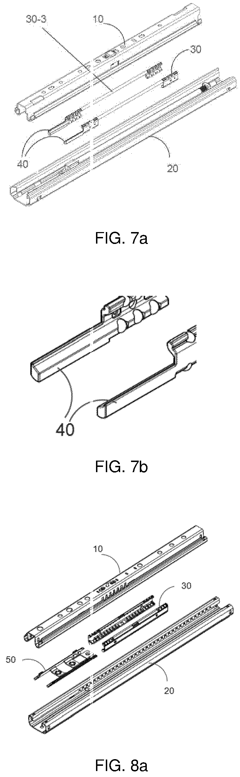

The retainer in this embodiment may adopt other forms. Referring to FIG. 7a and FIG. 7b, the middles of two ends of each retainer 30 are connected together through a straw 30-3, a supporting structure 40 is arranged at one end of the retainer 30, and the supporting structure 40 provides support for the upper rail assembly.

### Embodiment 2

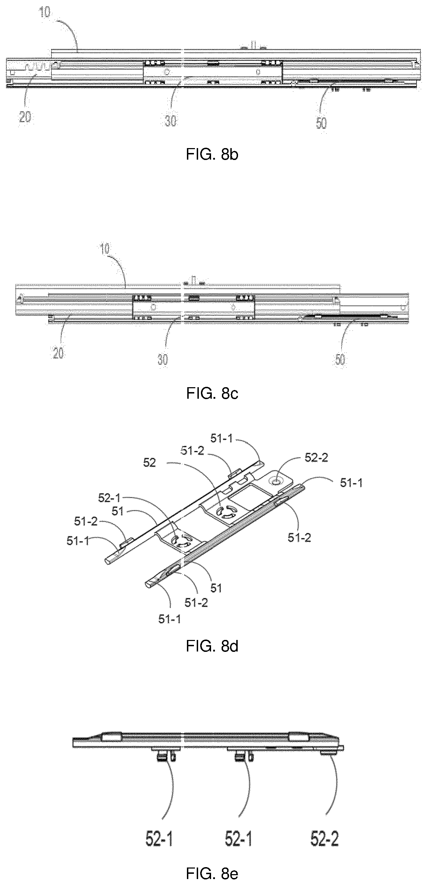

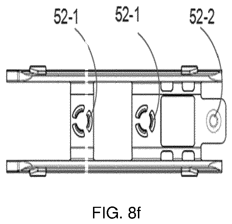

This embodiment aims at the optimization of a sliding rail of a short rear retainer 30. The rear stroke of the sliding rail of the rear seat of a vehicle is generally short, so the selected retainer 30 is short. Under the working condition of the short retainer 30, when the upper sliding rail is located at a design position or a frontmost position of a comfortable stroke, the sliding rail will have a poor modal, and the fundamental reason is that a rear end of the upper sliding rail is in a suspended state and lacks support. The present invention designs an auxiliary supporting structure used in cooperation with the short retainer 30. Through cooperation between the short retainer 30 and the new structure, support is provided for an upper rail all the time, in particular, under a shaking occasion, the modal performance of the sliding rail can be effectively improved. The specific solutions are as follows:
a sliding rail having an enhanced rigidity modulus includes an upper rail assembly 10, a lower rail assembly 20, and retainers 30; the upper rail assembly 10 is slidably arranged in a sliding groove of the lower rail assembly 20 through a pair of retainers 30; first raised ribs and/or steel ball clamping grooves are arranged at intervals on surfaces, in contact with the upper rail assembly 10 and the lower rail assembly 20, of the retainers 30; steel balls are mounted in the steel ball clamping grooves; a fixed supporting structure 50 is fixedly mounted at a rear end in the sliding groove; and when the upper rail assembly 10 slides backwards to the farthest stroke, the fixed supporting structure 50 provides longitudinal auxiliary support for a mid-rear section of the upper rail assembly 10, as shown in FIG. 8a to FIG. 8c.

In an optional embodiment, as shown in FIG. 8d, supporting strips 51 located in a length direction of the lower rail assembly 20 are arranged on two sides of the supporting structure; guide bevel edges are arranged on upper surfaces of two ends of the supporting strips 51; and when the upper rail moves relative to the lower rail, the upper rail can be prevented from colliding with the fixed supporting structure 50, and damage to the structure of the fixed supporting structure 50 can be avoided. Furthermore, retainer stop blocks 51-2 for limiting the sliding strokes of the retainers 30 are respectively arranged at front and rear ends of the supporting strips 51, and the retainer stop blocks 51-2 can replace retainer blocking points on the sliding rail.

In an optional embodiment, two supporting strips 51 are fixedly connected through a connecting plate 52, at least one elastic buckle 52-1 protruding downwards and in clamping connection with a bottom plate of the sliding groove is arranged on the connecting plate 52, and the fixed supporting structure 50 is fixedly mounted in a sliding rail hole of the lower rail through the elastic buckle 52-1; furthermore, at least one positioning column 52-2 protruding downwards and embedded into a positioning hole in the bottom plate of the sliding groove is arranged on the connecting plate 52, and plays a guide and positioning role during mounting.

The retainers 30 in this embodiment adopt existing design. During use, the steel balls are embedded into the steel ball clamping grooves of the retainers 30, then the retainers 30 are bent along thin sides, the retainers 30 are assembled in the middle of the upper rail and the lower rail, and the retainers 30 can slide with the upper sliding rail along a ball groove and provide support for the upper rail within the stroke range of the sliding rail.

The fixed supporting structure newly designed by the present invention is made of a POM material with high hardness and rigidity and is connected and fixed to the lower sliding rail through the elastic buckle 52-1, and the tail ends of the supporting strip 51 provide support for the upper rail at the rear section of the sliding rail; and through cooperation between the retainers 30 and the fixed supporting structure 50, support is provided for the whole upper rail, in particular, under the working condition of bumping and shaking, the modal of the sliding rail can be effectively improved.

The preferred embodiments of the present invention are described above. It should be understood that the present invention is not limited to the above specific embodiments, but defined by the appended claims.

## Claims

1. A sliding rail having an enhanced rigidity modulus, comprising an upper rail assembly (10), a lower rail assembly (20), and retainers (30), wherein the upper rail assembly (10) is slidably arranged in a sliding groove in the lower rail assembly (20) through a pair of retainers (30); first raised ribs and/or steel ball clamping grooves are arranged at intervals on surfaces, in contact with the upper rail assembly (10) and the lower rail assembly (20), of the retainers (30); a steel ball is mounted in the steel ball clamping groove;
a supporting structure (40) extending backwards in a length direction of the retainers (30) is arranged at a rear end of each of the retainers (30); and when the upper rail assembly (10) slides backwards to the farthest stroke, the supporting structure (40) provides longitudinal auxiliary support for a mid-rear section of the upper rail assembly (10), the supporting structure (40) is in contact with the lower rail assembly (20), and a gap is reserved between the supporting structure (40) and the upper rail assembly (10),
second raised ribs are arranged at intervals on a surface, in contact with the lower rail assembly (20), of the supporting structure (40); and/or
a surface of the supporting structure (40) is spray-coated with a lubricating coating; and/or
surfaces of the retainers (30) are spray-coated with lubricating coatings; and/or
a grease layer is arranged between the supporting structure (40), and the upper rail assemblies (10) and lower rail assemblies (20) and **characterized in that**
the supporting structure (40) of each of the retainers (30) is located under a bottom surface of the upper rail assembly (10), and wherein the supporting structure (40) is filled with metal wires or metal balls.

2. A sliding rail having an enhanced rigidity modulus, comprising an upper rail assembly (10), a lower rail assembly (20), and retainers (30), wherein the upper rail assembly (10) is slidably arranged in a sliding groove in the lower rail assembly (20) through a pair of retainers (30); first raised ribs and/or steel ball clamping grooves are arranged at intervals on surfaces, in contact with the upper rail assembly (10) and the lower rail assembly (20), of the retainers (30); a steel ball is mounted in the steel ball clamping groove;
a supporting structure (40) is fixedly mounted at a rear end in the sliding groove; and when the upper rail assembly (10) slides backwards to the farthest stroke, the supporting structure (40) provides longitudinal auxiliary support for the mid-rear section of the upper rail assembly (10),
second raised ribs are arranged at intervals on a surface, in contact with the lower rail assembly (20), of the supporting structure (40); and/or
a surface of the supporting structure (40) is spray-coated with a lubricating coating; and/or
surfaces of the retainers (30) are spray-coated with lubricating coatings; and/or
a grease layer is arranged between the supporting structure (40), and the upper rail assemblies (10) and lower rail assemblies (20) and **characterized in that**
the supporting structure (40) of each of the retainers (30) is located under a bottom surface of the upper rail assembly (10), and wherein the supporting structure (40) is filled with metal wires or metal balls.

3. The sliding rail having an enhanced rigidity modulus according to claim 1 or 2, **characterized in that** the retainers (30) are made of polyamide-6 materials, and the supporting structure (40) is made of polyformaldehyde resin.

4. The sliding rail having an enhanced rigidity modulus according to claim 1 or 2, **characterized in that** the retainers (30) and the supporting structure (40) are made of polyamide-6 materials.

5. The sliding rail having an enhanced rigidity modulus according to claims 1 or 2, **characterized in that** the lubricating coating is a polytetrafluoroethylene coating.

6. The sliding rail having an enhanced rigidity modulus according to claim 1, **characterized in that** a guide bevel edge (42) is arranged at a tail end of the supporting structure (40).

7. The sliding rail having an enhanced rigidity modulus according to claim 2, **characterized in that** supporting strips (51) located in a length direction of the lower rail assembly (20) are arranged on two sides of the supporting structure (40); guide bevel edges (42) are arranged at two ends of each of the supporting strips (51); and retainer stop blocks (51-2) for limiting the sliding strokes of the retainers (30) are respectively arranged at front and rear ends of the supporting strips (51).

8. The sliding rail having an enhanced rigidity modulus according to claim 7, **characterized in that** two supporting strips (51) are fixedly connected through a connecting plate (52); at least one elastic buckle (52-1) protruding downwards and in clamping connection with a bottom plate of the sliding groove is arranged on the connecting plate (52); and/or at least one positioning column (52-2) protruding downwards and embedded into a positioning hole in the bottom plate of the sliding groove is arranged on the connecting plate (52).

## Patentansprüche

1. Gleitschiene, die einen verbesserten Schubmodul aufweist, umfassend eine obere Schienenanordnung (10), eine untere Schienenanordnung (20) und Halter (30), wobei die obere Schienenanordnung (10) durch ein Paar Halter (30) gleitend in einer Gleitnut in der unteren Schienenanordnung (20) angeordnet ist; erste erhöhte Rippen und/oder Stahlkugel-Klemmnuten in Intervallen auf Oberflächen angeordnet sind, die mit der oberen Schienenanordnung (10) und der unteren Schienenanordnung (20) der Halter (30) in Kontakt stehen; eine Stahlkugel in der Stahlkugel-Klemmnut montiert ist;
eine sich nach hinten in einer Längsrichtung der Halter (30) erstreckende Stützstruktur (40) an einem hinteren Ende jedes der Halter (30) angeordnet ist; und wenn die obere Schienenanordnung (10) bis zum äußersten Hub nach hinten gleitet, die Stützstruktur (40) eine Längshilfsstütze für einen mittleren hinteren Abschnitt der oberen Schienenanordnung (10) bereitstellt, die Stützstruktur (40) mit der unteren Schienenanordnung (20) in Kontakt steht und ein Spalt zwischen der Stützstruktur (40) und der oberen Schienenanordnung (10) freigelassen ist,
zweite erhöhte Rippen in Intervallen auf einer Oberfläche in Kontakt mit der unteren Schienenanordnung (20) der Stützstruktur (40) angeordnet sind; und/oder
eine Oberfläche der Stützstruktur (40) mit einer Schmierbeschichtung sprühbeschichtet ist; und/oder
Oberflächen der Halter (30) mit Schmierbeschichtungen sprühbeschichtet sind; und/oder
eine Fettschicht zwischen der Stützstruktur (40) und den oberen Schienenanordnungen (10) und unteren Schienenanordnungen (20) angeordnet ist und **dadurch gekennzeichnet, dass**
die Stützstruktur (40) jedes der Halter (30) sich unter einer Bodenonberfläche der oberen Schienenanordnung (10) befindet, und wobei die Stützstruktur (40) mit Metalldrähten oder Metallkugeln gefüllt ist.

2. Gleitschiene, die einen verbesserten Schubmodul aufweist, umfassend eine obere Schienenanordnung (10), eine untere Schienenanordnung (20) und Halter (30), wobei die obere Schienenanordnung (10) durch ein Paar Halter (30) gleitend in einer Gleitnut in der unteren Schienenanordnung (20) angeordnet ist; erste erhöhte Rippen und/oder Stahlkugel-Klemmnuten in Intervallen auf Oberflächen angeordnet sind, die mit der oberen Schienenanordnung (10) und der unteren Schienenanordnung (20) der Halter (30) in Kontakt stehen; eine Stahlkugel in der Stahlkugel-Klemmnut montiert ist;
eine Stützstruktur (40) fest an einem hinteren Ende in der Gleitnut montiert ist; und wenn die obere Schienenanordnung (10) bis zum äußersten Hub nach hinten gleitet, die Stützstruktur (40) eine Längshilfsstütze für den mittleren hinteren Abschnitt der oberen Schienenanordnung (10) bereitstellt,
zweite erhöhte Rippen in Intervallen auf einer Oberfläche in Kontakt mit der unteren Schienenanordnung (20) der Stützstruktur (40) angeordnet sind; und/oder
eine Oberfläche der Stützstruktur (40) mit einer Schmierbeschichtung sprühbeschichtet ist; und/oder
Oberflächen der Halter (30) mit Schmierbeschichtungen sprühbeschichtet sind; und/oder
eine Fettschicht zwischen der Stützstruktur (40) und den oberen Schienenanordnungen (10) und unteren Schienenanordnungen (20) angeordnet ist und **dadurch gekennzeichnet, dass**
die Stützstruktur (40) jedes der Halter (30) sich unter einer Bodenonberfläche der oberen Schienenanordnung (10) befindet, und wobei die Stützstruktur (40) mit Metalldrähten oder Metallkugeln gefüllt ist.

3. Gleitschiene, die einen verbesserten Schubmodul aufweist, nach Anspruch 1 oder 2, **dadurch gekennzeichnet, dass** die Halter (30) aus Polyamid-6-Materialien gefertigt sind, und die Stützstruktur (40) aus Polyformaldehydharz gefertigt ist.

4. Gleitschiene, die einen verbesserten Schubmodul aufweist, nach Anspruch 1 oder 2, **dadurch gekennzeichnet, dass** die Halter (30) und die Stützstruktur (40) aus Polyamid-6-Materialien gefertigt sind.

5. Gleitschiene, die einen verbesserten Schubmodul aufweist, nach Anspruch 1 oder 2, **dadurch gekennzeichnet, dass** die Schmierbeschichtung eine Polytetrafluorethylenbeschichtung ist.

6. Gleitschiene, die einen verbesserten Schubmodul aufweist, nach Anspruch 1, **dadurch gekennzeichnet, dass** an einem hinteren Ende der Stützstruktur (40) eine Schrägführungskante (42) angeordnet ist.

7. Gleitschiene, die einen verbesserten Schubmodul aufweist, nach Anspruch 2, **dadurch gekennzeichnet, dass** Stützleisten (51), die sich in Längsrichtung der unteren Schienenanordnung (20) befinden, auf zwei Seiten der Stützstruktur (40) angeordnet sind; Schrägführungskanten (42) an zwei Enden jeder der Stützleisten (51) angeordnet sind; und Halteanschlagblöcke (51-2) zur Begrenzung der Gleithübe der Halter (30) jeweils an den vorderen und hinteren Enden der Stützleisten (51) angeordnet sind.

8. Gleitschiene, die einen verbesserten Schubmodul aufweist, nach Anspruch 7, **dadurch gekennzeichnet, dass** zwei Stützleisten (51) durch eine Verbindungsplatte (52) fest verbunden sind; auf der Verbindungsplatte (52) mindestens eine nach unten überstehende und in Klemmverbindung mit einer Bodenplatte der Gleitnut stehende elastische Schnalle (52-1) angeordnet ist; und/oder auf der Verbindungsplatte (52) mindestens eine nach unten überstehende und in ein Positionierloch in der Bodenplatte der Gleitnut eingebettete Positioniersäule (52-2) angeordnet ist.

## Revendications

1. Rail coulissant présentant un module de rigidité amélioré, comprenant un ensemble de rail supérieur (10), un ensemble de rail inférieur (20) et des dispositifs de retenue (30), dans lequel l'ensemble de rail supérieur (10) est agencé de manière coulissante dans une rainure coulissante dans l'ensemble de rail inférieur (20) par l'intermédiaire d'une paire de dispositifs de retenue (30) ; des premières nervures surélevées et/ou des rainures de serrage à bille d'acier sont agencées à intervalles sur des surfaces, en contact avec l'ensemble de rail supérieur (10) et l'ensemble de rail inférieur (20), des dispositifs de retenue (30) ; une bille d'acier est montée dans la rainure de serrage à bille d'acier ;
une structure de support (40) s'étendant vers l'arrière dans une direction longitudinale des dispositifs de retenue (30) est agencée à une extrémité arrière de chacun des dispositifs de retenue (30) ; et lorsque l'ensemble de rail supérieur (10) coulisse vers l'arrière jusqu'à la course la plus éloignée, la structure de support (40) fournit un support auxiliaire longitudinal pour une section médiane arrière de l'ensemble de rail supérieur (10), la structure de support (40) est en contact avec l'ensemble de rail inférieur (20), et un espace est réservé entre la structure de support (40) et l'ensemble de rail supérieur (10),
des secondes nervures surélevées sont agencées à intervalles sur une surface, en contact avec l'ensemble de rail inférieur (20), de la structure de support (40) ; et/ou
une surface de la structure de support (40) est revêtue par pulvérisation d'un revêtement lubrifiant ; et/ou
les surfaces des dispositifs de retenue (30) sont revêtues par pulvérisation de revêtements lubrifiants ; et/ou
une couche de graisse est agencée entre la structure de support (40), et les ensembles de rail supérieur (10) et les ensembles de rail inférieur (20) et **caractérisé en ce que**
la structure de support (40) de chacun des dispositifs de retenue (30) est située sous une surface inférieure de l'ensemble de rail supérieur (10), et dans lequel la structure de support (40) est remplie de fils métalliques ou de billes métalliques.

2. Rail coulissant présentant un module de rigidité amélioré, comprenant un ensemble de rail supérieur (10), un ensemble de rail inférieur (20) et des dispositifs de retenue (30), dans lequel l'ensemble de rail supérieur (10) est agencé de manière coulissante dans une rainure coulissante dans l'ensemble de rail inférieur (20) par l'intermédiaire d'une paire de dispositifs de retenue (30) ; des premières nervures surélevées et/ou des rainures de serrage à bille d'acier sont agencées à intervalles sur des surfaces, en contact avec l'ensemble de rail supérieur (10) et l'ensemble de rail inférieur (20), des dispositifs de retenue (30) ; une bille d'acier est montée dans la rainure de serrage à bille d'acier ;
une structure de support (40) est montée fixement à une extrémité arrière dans la rainure coulissante ; et lorsque l'ensemble de rail supérieur (10) coulisse vers l'arrière jusqu'à la course la plus éloignée, la structure de support (40) fournit un support auxiliaire longitudinal pour la section médiane arrière de l'ensemble de rail supérieur (10),
des secondes nervures surélevées sont agencées à intervalles sur une surface, en contact avec l'ensemble de rail inférieur (20), de la structure de support (40) ; et/ou
une surface de la structure de support (40) est revêtue par pulvérisation d'un revêtement lubrifiant ; et/ou
les surfaces des dispositifs de retenue (30) sont revêtues par pulvérisation de revêtements lubrifiants ; et/ou
une couche de graisse est agencée entre la structure de support (40), et les ensembles de rail supérieur (10) et les ensembles de rail inférieur (20) et **caractérisé en ce que**
la structure de support (40) de chacun des dispositifs de retenue (30) est située sous une surface inférieure de l'ensemble de rail supérieur (10), et dans lequel la structure de support (40) est remplie de fils métalliques ou de billes métalliques.

3. Rail coulissant présentant un module de rigidité amélioré selon la revendication 1 ou 2, **caractérisé en ce que** les dispositifs de retenue (30) sont en matériaux polyamide-6, et la structure de support (40) est en résine de polyformaldéhyde.

4. Rail coulissant présentant un module de rigidité amélioré selon la revendication 1 ou 2, **caractérisé en ce que** les dispositifs de retenue (30) et la structure de support (40) sont en matériaux polyamide-6.

5. Rail coulissant présentant un module de rigidité amélioré selon les revendications 1 ou 2, **caractérisé en ce que** le revêtement lubrifiant est un revêtement en polytétrafluoroéthylène.

6. Rail coulissant présentant un module de rigidité amélioré selon la revendication 1, **caractérisé en ce qu'**un bord biseauté de guidage (42) est agencé à une extrémité de queue de la structure de support (40).

7. Rail coulissant présentant un module de rigidité amélioré selon la revendication 2, **caractérisé en ce que** des bandes de support (51) situées dans une direction longitudinale de l'ensemble de rail inférieur (20) sont agencées sur deux côtés de la structure de support (40) ; des bords biseautés de guidage (42) sont agencés à deux extrémités de chacune des bandes de support (51) ; et des blocs de butée de dispositif de retenue (51-2) pour limiter les courses de coulissement des dispositifs de retenue (30) sont agencés respectivement aux extrémités avant et arrière des bandes de support (51).

8. Rail coulissant présentant un module de rigidité amélioré selon la revendication 7, **caractérisé en ce que** deux bandes de support (51) sont reliées fixement par une plaque de liaison (52) ; au moins une boucle élastique (52-1) faisant saillie vers le bas et en liaison de serrage avec une plaque inférieure de la rainure coulissante est agencée sur la plaque de liaison (52) ; et/ou au moins une colonne de positionnement (52-2) faisant saillie vers le bas et encastrée dans un trou de positionnement dans la plaque inférieure de la rainure coulissante est agencée sur la plaque de liaison (52).
